# EUROPÄISCHE PATENTANMELDUNG

(11) **EP 1 908 998 A1**
(43) Veröffentlichungstag der Anmeldung: **09.04.2008**
(21) Anmeldenummer: 06021111.7
(22) Anmeldetag: 08.10.2006
(51) Int. Cl.: F16J 15/08

(54) **Weichmetalldichtung**

(71) Anmelder: Hiss, Ludwig, 79346 Endingen (DE)
(72) Erfinder: Hiss, Ludwig, 79346 Endingen (DE)
(74) Vertreter: Miller, Andreas

(57) **Zusammenfassung**

Die Erfindung betrifft eine Metalldichtung aus Zinn, Blei, Indium, Gold, Kupfer, Aluminium, kalt verformbarer Legierungen davon oder weicher weiterer Metallegierungen, alle mit einer Härte nach Mohs zwischen 1 und 3, sowie Verfahren zu deren Herstellung und Verwendung, und die bei ähnlicher Art und Bauform der abzudichtenden Körper an Stelle von Elastomer- und Polymermaterialien eingesetzt werden kann. Der Vorteil der erfindungsgemäßen Dichtung liegt dabei in einer wesentlichen Reduktion der Diffusion von Fremdstoffen durch den Dichtungsbereich, und dass dadurch gegenüber Kunststoffen sehr viel bessere Dichtigkeitswerte erzielt werden können.

## Beschreibung

Die Erfindung betrifft eine Metalldichtung aus Zinn, Blei, Indium, Gold, Kupfer, Aluminium, kalt verformbarer Legierungen davon oder weicher weiterer Metallegierungen, alle mit einer Härte nach Mohs zwischen 1 und 3, sowie Verfahren zu deren Herstellung und Verwendung, und die bei ähnlicher Art und Bauform der abzudichtenden Körper an Stelle von Elastomer- und Polymermaterialien eingesetzt werden kann. Der Vorteil der erfindungsgemäßen Dichtung liegt dabei in einer wesentlichen Reduktion der Diffusion von Fremdstoffen durch den Dichtungsbereich, und dass dadurch gegenüber Kunststoffen sehr viel bessere Dichtigkeitswerte erzielt werden können.

Dichtigkeit zwischen zwei Flächen könnte im Idealfall ohne Zuhilfenahme von Dichtungsmaterialien erreicht werden. Dazu müssten die zu dichtenden Flächen eine praktisch nicht erreichbare glatte Oberfläche besitzen, bzw. die Kraft, die die zu dichtenden Flächen zusammenpresst, so groß sein, dass sämtliche Hohlräume, die durch Unebenheiten zwischen den Dichtflächen zustande kommen, entfernt werden.

Stand der Technik ist es, zwischen die zu dichtenden Flächen ein weiches Dichtmaterial einzufügen, welches sich beim Zusammenpressen der Gesamtanordnung leicht und flexibel auf den Dichtflächen zusammendrücken oder in vorgegebene Hohlräume der zu dichtenden Flächen eindrücken lässt. Ein Standardprodukt des Standes der Technik sind allseits bekannte O-Ringe aus Elastomer- und Polymerkunststoffen. Verschiedene, im Rahmen zu den Arbeiten zur vorliegenden Erfindung untersuchte O-Ring Anordnungen erreichten typische Heliumleckraten <10⁻⁶ mbar l s⁻¹. Dies ist gegenüber heutigen wissenschaftlichen und technischen Anforderungen absolut nicht mehr ausreichend.

Aufgabe dieser Erfindung war es daher, Dichtungsanordnungen mit sehr viel kleineren Heliumleckraten herzustellen.

Gegenstand der Erfindung sind daher Dichtungsanordungen und Metalldichtungen mit denen Werte unterhalb der zuverlässigen Nachweisgrenze von 10⁻¹¹ mbar I s⁻¹ handelsüblicher Heliumlecksucher erreicht werden. Die erfindungsgemäße Dichtung hat daher Heliumleckraten zwischen 10⁻⁶ mbar I s⁻¹ und 10⁻¹³ mbar I s⁻¹, bevorzugt zwischen 10 ⁹ mbar I s⁻¹ und 10⁻¹² mbar I s⁻¹, ganz besonders bevorzugt höchstens 10⁻¹¹ mbar I s⁻¹. Voraussetzung für diese Entwicklung war der Wechsel von Kunststoffen auf weiche Metalle. Als Dichtungsmaterial geeignet sind z.B. Zinn, Blei, Indium, Gold, und andere Metalle wie Kupfer und Aluminium, die besonderen zusätzlichen Behandlungen, wie z.B. "Weichglühen" unterzogen werden. Auch entsprechend weiche Legierungen von Metallen sind selbstverständlich geeignet. Alle geeigneten Metalle und Legierungen sollten eine Härte nach Mohs zwischen 1 und 3 aufweisen, bevorzugt zwischen 2 und 3.

Neben den Dichtungsmaterialien wurde das Verformungsverhalten von Dichtungen untersucht und auf dieser Grundlage die geeignete Dichtungsform gefunden, sowie deren Herstellung und Verwendung.

Ein weiterer Gegenstand der Erfindung ist daher die Verwendung der erfindungsgemäßen Metalldichtung in Dichtungsanordnungen zur Erzielung der beschriebenen Dichtungsparameter.

Ein weiterer Gegenstand der Erfindung sind daher auch Verfahren zur Herstellung von Dichtungselementen mittels der erfindungsgemäßen Metalldichtung zur Erzielung der beschriebenen Dichtungsparameter und die Ausgestaltung der räumlichen Form dieser Dichtungselemente.

Ein weiterer Gegenstand der Erfindung besteht darin, daß durch die Duktilität der erfindungsgemäßen Dichtungsmaterialien keine erhöhten Ansprüche an die Oberflächenrauhigkeit der verwendeten Dichtungselemente gestellt werden und daher zudem auch keine zusätzlichen Oberflächenbehandlungsmittel, wie Fette, Öle, Silikone oder ähnliche Gleitmittel zur Erzielung der gewünschten Dichtigkeit benötigt werden.

Die Gegenstände der Erfindung werden durch die Beschreibung, Beispiele und die zugehörigen Abbildungen näher erläutert.

Kurzbeschreibung der Abbildungen:
- Fig. 1:: Pressverhalten eines aus Zinn hergestellten O-Rings
- Fig. 2:: Ausführung einer "Flächendichtung"
- Fig. 3:: Ausführung einer "Volumendichtung"
- Fig. 4:: Ausführungsbeispiel "Vakuumbauteil - ISO-KF Kleinflansch (DIN 28403)"

Detaillierte Beschreibung der Abbildungen mit den zugehörigen Beispielen:

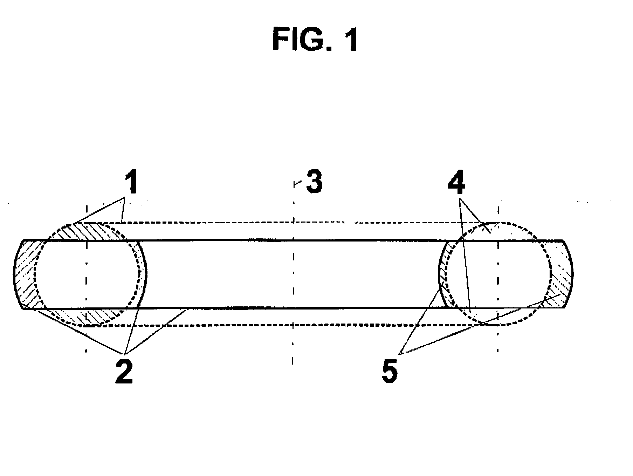

Fig. 1 zeigt die Form (1) eines aus Zinn hergestellten O-Rings. Er wurde zwischen zwei parallelen, glatten Flächen durch eine Presskraft parallel zur Rotationsachse (3) zusammengedrückt. Der aus diesem Vorgang resultierende Körper (2) zeigt einen Übergang, der im Schnitt dargestellten Kreisringsegmente (4) der Form (1) in der Dicken-, Durchmesser- und Höhenveränderung der Form (2).

Die wichtigste Erkenntnis aus dieser Untersuchung war, dass das Material des Kreisrings nicht gleichmäßig, bezogen auf die beiden senkrecht gezeichneten Kreisquerschnittachsen fließt, sondern sich auf Basis der Kreisringgeometrie eine sehr viel größere Außendurchmesser- als Innendurchmesserveränderung einstellt. Das Volumenverhältnis (5) beträgt, bezogen auf den mittleren Kreisringdurchmesser, (innen / außen) ca. 4/9.

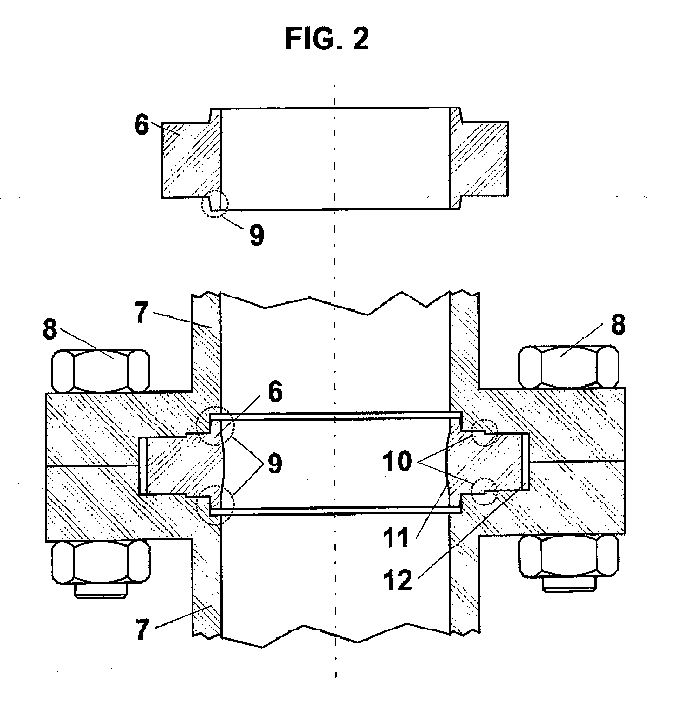

Der in Fig. 2 (oberer Bildbereich) dargestellte, ungepresst rechteckige Dichtring (6) stellt das Ergebnis für die zweckmäßigste Form der im Rahmen dieser Erfindung entwickelten "Flächendichtung" dar. Er nutzt die Erkenntnis des in Fig. 1 gezeigten Materialfließverhaltens optimal aus. Im unteren Bildbereich ist die Dichtungsanordnung in ihrem endgültigen Presszustand dargestellt. Der beidseitige Zentrierkonus (9) hilft die beiden Dichtungsflansche (7) symmetrisch zur Mittelachse zu zentrieren. Mit beginnender Flächenpressung, durch Anziehen der Schrauben (8), kerben sich die senkrechten Zentrierkanten der Flansche (7) in den Dichtring ein. Gepaart mit dem Materialfließverhalten, das vornehmlich senkrecht und weg von der Mittelachse zeigt, werden im Bereich (9) bereits beste Dichtungsverhältnisse erzielt. Zur Verbesserung der Reproduzierbarkeit und zur Vermeidung der Fehleranfälligkeit bei Verletzung dieser Flanschstelle wird dieses Prinzip wiederholt durch die Treppenform (10) angewandt. Die Treppen, als Absatz >0,05 mm senkrecht zur Materialfließrichtung in die Flansche (7) eingebaut, verringern den Fließquerschnitt erneut und verbessern durch den erhöhten Dichtungsmaterialdruck an dieser Stelle das Dichtungsverhalten ein weiteres Mal.

Die Metalldichtung (6) sollte in ihrem Endpresszustand keinen weiteren äußeren mechanischen Einflüssen mehr ausgesetzt werden. Deshalb ist es vorteilhaft, die Konstruktion der Dichtungsstelle für diesen Zustand so auszuführen, dass die Dichtungsflansche (7) alle Kräfte, die auf das System von außen wirken, direkt aufnehmen.

Die in Fig. 2 gezeigte Verformung der Metalldichtung (6) weist diese als "Flächendichtung" aus. Praktische Erfahrungen zeigen negative Einflüsse auf das Dichtungsverhalten, wenn sich die Metalldichtung während des Press- / Fließvorgangs an anderen, außerhalb der gezeichneten Berührungsstellen Flansche (7) / Metalldichtung (6), abstützen kann. Fin der Dichtungsgeometrie angepasster Ausdehnungsfreiraum (12) muss deshalb bei einer optimal wirkenden "Flächendichtung" konstruktiv berücksichtigt werden.

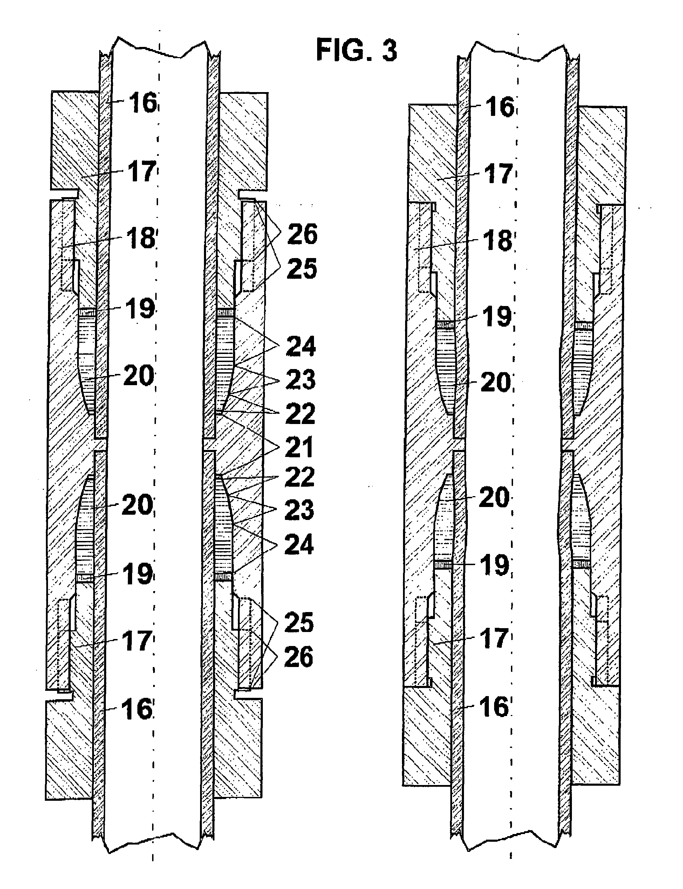

Fig. 3 zeigt an Hand einer Verschraubung für zwei gleiche Rohrleitungen (16) das Beispiel einer "Volumendichtung". Im Gegensatz zur Flächendichtung wird hier der Dichtungsmetallring (20) in einen allseitig verschlossenen Raum gepresst. Die linke Seite Fig. 3 zeigt die Verschraubung in ungepresstem Zustand. Die Dichtungsmetallringe (20) bestehen aus einem zylindrischen Bereich (24), angrenzendem Konusstumpf (23) mit ca. ½ Konuswinkel des angrenzenden Endkonusstumpfs (22). Die die Dichtungsmetallringe (20) zur Außenseite hin umhüllende Verschraubungshülse (18) besitzt an der Einbaustelle der Dichtungsmetallringe (20) dieselbe Kontur (zylindrisch / konisch) wie die Dichtungsmetallringe (20). Der Endkonusstumpf ist bei selbem Endkonuswinkel jedoch verlängert, so dass der Hohlraum (21) entsteht. Durch Pressen der Dichtungsmetallringe (20) in den Hohlraum (21), bei gleichzeitiger Abstützung der Dichtungsmetallringinnendurchmesser (20) an den Rohraußendurchmessern (16), entstehen die Dichtungseigenschaften. Die Pressung erfolgt durch Einschrauben der Druckschrauben (17) in die Verschraubungshülsen (18) in den Feingewindebereichen (25) und (26). Eine dichtungsverschlechternde Verdrehung der Dichtungsmetallringe (20) während des Pressvorgangs wird durch die Zwischenlegscheibe (19) vermieden. Der maximal mögliche Dichtungsdruck ist erreicht, sobald der Kopf der Druckschraube (17) auf dem Ende der Verschraubungshülse (18) aufsitzt (siehe rechte Seite Fig. 3). Das Volumen der Dichtungsmetallringe (20) wird mittels der Länge des zylindrischen Anteils (24) so bemessen, dass die Rohrwandungen (16) im Bereich der Dichtungsmetallringe (20), auf Basis des hydraulischen Drucks der Dichtungsmetallringe (20) eine leichte Wölbung in Richtung Zentrumsachse erhalten. Diese Wölbung führt zu einer gewünschten, teilweise dauerelastischen Verformung der Rohrwandungen (16), die die Langzeitbeständigkeit des Dichtungsverhaltens positiv beeinflusst. Der Anwender erhält durch das "Festschrauben" der Druckschrauben (17) auf der Verschraubungshülse (18) außerdem eine sehr einfache Montagehilfe.

Die in Fig. 3 aufgezeigte Lösung funktioniert auch als einfache Rohrverbindung zu einem beliebigen Korper. Die Funktionen der Verschraubungshülse (18) werden zu diesem Zweck direkt in den Körper gebohrt, die Dichtungselemente (17), (19) und (20) können ohne Änderungen übernommen werden.

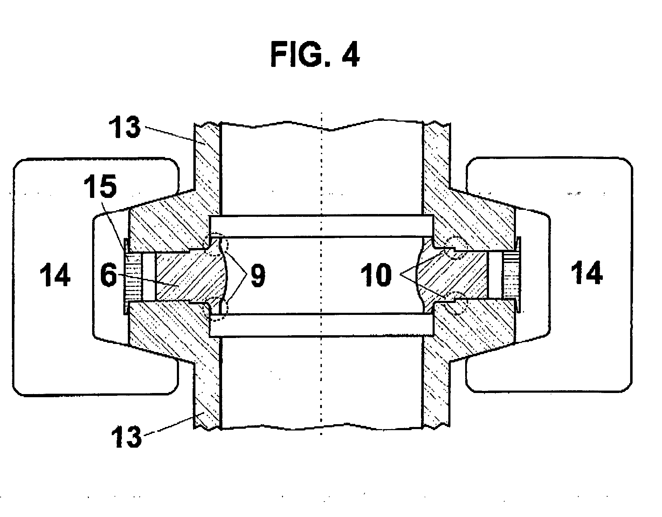

Fig. 4: zeigt das Ausführungsbeispiel "Vakuumbauteil - ISO-KF Kleinflansch (DIN 28403)". Im Unterschied zur bisherigen Beschreibung der "Flächendichtung" wird die Pressung durch Gegeneinanderziehen der Spannringe (14) erzeugt. Die Endlage der Pressung kann als Montagehilfe und zur gegenseitigen Flanschabstützung für von außen wirkende Kräfte durch den Abstandsfixierring (15) erzeugt worden.

In einem mit Standard-Vakuumkomponenten aufgebauten Heliumlecksucher wurden 10 Stück O-Ringe aus Viton gegen die erfindungsgemäßen Zinndichtungen ausgetauscht und als Praxistest Vergleichsmessungen durchgeführt. Dabei zeigte sich, dass bei sorgfälligem Metallringeinbau (6) hervorragende Dichtigkeitswerte auch ohne den Abstandsfixierring (15) und die zusätzliche Treppenform (10), nur mittels der Funktion des Zentrierkonus (9), erreichbar sind. Äußere Krafteinflüsse (z.B. hervorgerufen durch Vibrationen der Pumpen) haben bisher keine Verschlechterung bezüglich des Lebensdauerverhaltens gezeigt. Die Auflösung der unteren Messwertgrenze des Geräts konnte mit dem Dichtungsringtausch jedoch signifikant verbessert werden. Dies liegt am geringeren "Hintergrund Heliumpegel" durch die reduzierte Heliumdiffusion aus der Raumluft in den Vakuumbereich.

Die Messungen der Helium - Leckdichtigkeit erfolgen in einer die Bauteile umgebenden, reinen Helium Atmosphäre. Der Leck- bzw. Diffusionsstrom wird im Innenbereich der Versuchsanordnungen detektiert. Alle aufgezeigten Lösungen erzielten dabei Leckraten unterhalb der minimalen Auflösung von 10⁻¹¹ mbar I s⁻¹ marktüblicher Messgeräte. Direkte Vergleichsmessungen mit Elastomer- und Polymer O-Ringen zeigen, alternativ in denselben Bauteilen eingebaut, jeweils Leck- bzw. Diffusionsraten <10⁻⁶ mbar I s⁻¹.

Die gezeigten Dichtungsmetallringe können problemlos mit spanabhebenden Werkzeugmaschinen auf Basis von teilweise auch selbst gegossenen Halbzeugen hergestellt werden. Beispielsweise sind geeignete Zinnrohre als Ausgangsprodukte derzeitig am Markt nicht verfügbar. Für die Massenproduktion sind auch Stanztechniken und/oder Umformungstechniken geeignet.

Mit den jeweils fabrikneu eingesetzten Ausführungskomponenten "Vakuumbauteil - ISO-KF Kleinflansch (DIN 28403)" und Dichtungen an Ventilen, die für Analysezwecke geeignet sind, wurde der Nachweis geführt, dass keine erhöhten Ansprüche an die bisherigen Produkte bezüglich der Oberflächenrauhigkeit von Dichtsitzen Voraussetzung für den Einsatz von Weichmetalldichtungen sind.

Die dichtungserzeugenden Druck- bzw. Fließkräfte waren in allen Prüfanordnungen mit den konstruktiv bereits vorhandenen Spann- / Druckvorrichtungen (Schrauben / Gewinden) erzielbar. Da die Diffusionswiderstände von Metallen um mehrere Größenordungen größer sind als bei den bisher eingesetzten Kunststoffen, können bei Neukonstruktionen die benötigten Kräfte auf Basis kleiner Dichtungsquerschnitte sogar reduziert werden.

## Patentansprüche

1. Metalldichtung bestehend aus Zinn, Blei, Indium, Gold, Kupfer, Aluminium, kalt verformbarer Legierungen davon oder weicher anderer Metallegierungen.

2. Metalldichtung gemäß Anspruch 1 als Ersatz für O-Ringe aus Elastomer- und Polymermaterialien.

3. Metalldichtung gemäß Anspruch 1, **dadurch gekennzeichnet, daß** die Helium-Leckrate der Dichtung zwischen 10-6 mbar I s-1 und 10-13 mbar I s-1, bevorzugt zwischen 10-9 mbar I s-1 und 10-12 mbar I s 1, ganz besonders bevorzugt höchstens 10-11. mbar I s-1 beträgt.

4. Metalldichtung gemäß der Ansprüche 1 bis 3, **dadurch gekennzeichnet, daß** der Dichtring (6) als Flächendichtung eine rechteckige oder rechteckähnliche Querschnittsfläche besitzt.

5. Metalldichtung gemäß der Ansprüche 1 bis 3, **dadurch gekennzeichnet, daß** der Dichtring (20) als Volumendichtung eine Rechteckform mit sich konisch zuspitzenden Flächen besitzt.

6. Metalldichtung gemäß der Ansprüche 1 bis 3, **dadurch gekennzeichnet, daß** diese nur an den senkrecht zur Presskraft wirkenden Flächen dichtet.

7. Melalldichtung gemäß der Ansprüche 1 bis 3, bestehend aus zylindrisch geformtem Material und einer oder mehreren konischen Flächen, die in einen allseitig begrenzten Raum gepresst, auf Basis hydraulischer Presskraft dichtet.

8. Verwendung einer Metalldichtung gemäß der Ansprüche 4 bis 6 unter Zuhilfenahme eines Zentrierkonus und/oder Mantageendanschlags.

9. Verwendung einer Metalldichtung gemäß der Anspüche 4 bis 6 in Bauteilen, die neben den für die Aufnahme der Dichtringe erforderlichen Einrichtungen noch zusätzlich eine oder mehrere, in Fliessrichtung als Hindemis querschnittsverengend aufgebaute Treppen (10) besitzen.

10. Verwendung einer Metalldichtung gemäß der Anspüche 4 bis 6 in Bauteilen, die einen Ausdehnungsfreiraum in Fliessrichtung nach außen besitzen.

11. Verwendung einer Metalldichtung gemäß der Anspüche 4 bis 6 in Bauteilen, in denen diese durch hydraulische Presskraft in einer oder mehreren raumbegrenzende Flächen dauerelastisch verformt wird.

12. Verfahren zur Herstellung einer Metalldichtung gemäß der Ansprüche 1 bis 7 durch spanabhebende, stanzende und/oder umformende Technologien.
